# EUROPÄISCHE PATENTSCHRIFT

(11) **EP 3 470 269 B1**
(45) Veröffentlichungstag und Bekanntmachung des Hinweises auf die Patenterteilung: **13.05.2020**
(21) Anmeldenummer: 18199683.6
(22) Anmeldetag: 10.10.2018
(51) Int. Cl.: B60Q 1/24, B66F 17/00, B66F 11/04, A62C 27/00

(54) **VERFAHREN ZUR UMFELDBELEUCHTUNG EINES EINSATZFAHRZEUGS**
METHOD FOR PERIPHERAL LIGHTING OF A UTILITY VEHICLE
PROCÉDÉ D'ÉCLAIRAGE D'ENVIRONNEMENT D'UN VÉHICULE D'INTERVENTION

(30) Priorität: 11.10.2017 AT 508672017
(43) Veröffentlichungstag der Anmeldung: 17.04.2019
(73) Patentinhaber: Rosenbauer International AG, 4060 Leonding (AT)
(72) Erfinder: JULIEN, Andreas, 76149 Karlsruhe (DE)
(74) Vertreter: Burger, Hannes

(56) Entgegenhaltungen:
- WO-A1-2016/097139
- WO-A1-2016/097367
- WO-A2-2008/032280
- DE-U1-202004 004 805
- DE-U1-202007 004 459
- JP-A- 2015 067 185

## Beschreibung

Die Erfindung betrifft ein Verfahren zur Beleuchtung eines Umgebungsbereichs eines als Hubrettungsfahrzeug der Feuerwehr ausgebildeten Einsatzfahrzeugs, und zur optischen Erkennung eines ein Hindernis bildenden Gegenstandes oberhalb des Einsatzfahrzeugs.

In der Vergangenheit kam es insbesondere bei Dunkelheit immer wieder zu Unfällen, bei denen durch den Kontakt der Hubeinheit des Einsatzfahrzeugs, insbesondere des Auslegers, des Korbes oder der Korbbesatzung, mit oberhalb des Einsatzfahrzeugs befindlichen und elektrischen Strom führenden Leitungen oder Drähten das Fahrzeug beschädigt oder die Korbbesatzung verletzt worden ist. Dabei kam es auch zu Unfällen mit tödlichem Ausgang.

Bislang wurde versucht, bei einem Einsatz, insbesondere bei Dunkelheit, mittels am Fahrzeug oder an einem Korb der Hubeinheit angebrachter Sensoren elektrische Wechselfelder, welche in Leitungen, insbesondere in Hochspannungsleitungen, durch die Wechselspannung bzw. den Wechselstrom hervorgerufen werden, zu detektieren. Im Einsatzfall soll das Vorhandensein und die Erkennung von oberhalb des Umfeldes der geplanten Abstellfläche des Einsatzfahrzeugs befindlichen Leitungen einfach ermöglicht werden. Die Erkennung und/oder Detektierung ist jedoch bei Leitungen, in welchen Gleichstrom fließt, nur bedingt und mit hohem Aufwand möglich.

Ein gattungsgemäßes Verfahren ist aus JP 2005-067185 A bekannt.

Aufgabe der vorliegenden Erfindung war es, die Nachteile des Standes der Technik zu überwinden und ein Verfahren zur Verfügung zu stellen, mittels derer ein Benutzer in der Lage ist, bereits beim Eintreffen am Einsatzort und bei Dunkelheit rasch und sicher einen geeigneten Aufstellplatz für das Einsatzfahrzeug festlegen zu können und darüber hinaus das Vorhandensein von ein Hindernis bildenden Gegenständen, wie Drähte, Äste, vorkragende Gebäudeteile, elektrische Leitungen, Baukörper auf optischem Wege feststellen zu können und bei der Auswahl und Festlegung der Aufstellposition derartige Gegenstände mit berücksichtigen zu können.

Diese Aufgabe wird durch ein Verfahren zur Beleuchtung eines Umgebungsbereichs eines als Hubrettungsfahrzeug der Feuerwehr ausgebildeten Einsatzfahrzeugs, und zur optischen Erkennung eines ein Hindernis bildenden Gegenstandes und dem damit verbundenen Sichtbarmachen derartiger Gegenstände gemäß den Ansprüchen gelöst.

Das Verfahren dient überwiegend dazu, die rasche und sichere Erkennbarkeit von ein Hindernis bildenden Gegenständen oberhalb des Einsatzfahrzeugs zu verbessern, wobei die Schritte gemäß Anspruch 1 durchzuführen sind.

Vorteilhaft ist dabei, dass durch das Vorsehen und Bereitstellen zumindest eines Stellantriebs das zumindest eine weitere Leuchtmittel mit seiner Lichtabgabeachse mittels der Steuerungsvorrichtung auf die in der Steuerungsvorrichtung hinterlegte Abstrahlrichtung automatisiert eingestellt werden kann. Weiters wird damit aber auch bei Erkennen und/oder Erreichen zumindest des zweiten Betriebszustandes des Einsatzfahrzeuges das zumindest eine weitere Leuchtmittel von der Steuerungsvorrichtung mit Energie versorgt und damit in seinen Leuchtzustand versetzt. Durch die jeweils vorbestimmte und in der Steuerungsvorrichtung abgespeicherte Abstrahlrichtung sind von der Bedienperson, insbesondere dem Lenker, des Einsatzfahrzeugs keine zusätzlichen Maßnahmen oder Schaltvorgänge durchzuführen, um das zumindest eine weitere Leuchtmittel einzuschalten und auch gleich auf die vorbestimmte Abstrahlrichtung einzustellen. Damit kann im Einsatzfall von der Bedienperson rasch und konzentriert das Suchen, Auswählen und positionierte Abstellen des Einsatzfahrzeugs am Einsatzort an der dort ausgewählten und festgelegten Abstellfläche durchgeführt werden. Durch die automatische Inbetriebnahme und Ausrichtung der Abstrahlrichtung des zumindest einen weiteren Leuchtmittels kann so bereits unmittelbar beim Eintreffen am Einsatzort die geeignete Abstellposition rasch ermittelt und festgelegt werden. Durch das rasche und sichere Erkennen von störenden Hindernissen oberhalb des Einsatzfahrzeugs im Verstell- und/oder Schwenkbereich der Hubeinheit entfällt ein nachträgliches Umstellen, da so gefährliche Gegenstände, insbesondere elektrischen Strom führende Leitungen, bei Dunkelheit und schlechten Sichtverhältnissen rasch und sicher erkannt werden können.

Vorteilhaft kann durch die vorbestimmte Ausrichtung der Abstrahlrichtung auf die von der Abstellfläche abgewendete Seite, also in Richtung nach oben, je nach Anordnung des zumindest einen weiteren Leuchtmittels jener oberhalb der Abstellfläche befindliche Raum, in welchen der Ausleger oder die Bühne hin verstellt werden soll, ausreichend ausgeleuchtet oder beleuchtet werden.

Weiters kann damit aber auch bei Anordnung des zumindest einen weiteren Leuchtmittels an der verstellbaren Hubeinheit stets die gleiche Abstrahlrichtung beibehalten werden. Dies kann durch entsprechende Nachjustierung und Nachstellung mittels der Steuerungsvorrichtung und des damit in Kommunikationsverbindung stehenden Stellantriebs des weiteren Leuchtmittels durchgeführt werden.

Eine weitere vorteilhafte Vorgehensweise ist dadurch gekennzeichnet, dass die Lichtabgabeachse des zumindest einen weiteren Leuchtmittels ausgehend von der in vertikaler Richtung nach oben ausgerichteten Abstrahlrichtung um einen in der Steuerungsvorrichtung hinterlegten Schwenkwinkel verschwenkt wird. Bedingt durch die Verschwenkung der Lichtabgabe des zumindest einen weiteren Leuchtmittels kann so ein größerer Bereich beleuchtet oder bestrahlt werden. Dies kann insbesondere dann von Vorteil sein, wenn vom weiteren Leuchtmittel ein gebündelter Lichtstrahl abgegeben wird, um so die Leuchtweite zu vergrößern. Vorteilhaft ist auch eine Verfahrensvariante, bei welcher die Lichtabgabeachse des zumindest einen weiteren Leuchtmittels innerhalb eines in der Steuerungsvorrichtung hinterlegten Schwenkwinkelbereichs ständig verschwenkt wird. Dadurch kann die Lichtabgabeachse und damit das abgegebene Lichtbündel in einer oszillierende Bewegung ausgehend von der vertikalen Richtung ständig in vorbestimmten Grenzen verschwenkt werden. So kann die Betriebssicherheit im Einsatzfall erhöht werden.

Erfindungsgemäß kann auch während der Hochstellbewegung oder Hochschwenkbewegung der Hubeinheit stets eine nach oben ausgerichtete Abstrahlrichtung beibehalten und/oder stets auf das verstellte oder verschwenkte Personenaufnahmemittel während dessen Verstellung ausgerichtet werden.

Damit kann auch die nähere Umgebung des Personenaufnahmemittels, insbesondere des Rettungskorbs, beleuchtet werden, um so auf möglicherweise nicht beachtete Hindernisse rasch aufmerksam zu werden. Dadurch können Kollisionen auch während des Hochstell- oder Hochschwenkvorgangs vermieden werden.

Eine weitere vorteilhafte Vorgehensweise ist dadurch gekennzeichnet, dass das Ausrichten der Lichtabgabeachse des zumindest einen weiteren Leuchtmittels in Richtung auf das Personenaufnahmemittel insbesondere den Rettungskorb, erst bei einem Hochschwenken des Auslegers um einen Verstellwinkel von 15° bezüglich einer Horizontalebene durchgeführt wird. Dadurch wird sichergestellt, dass erst ab einem gewissen vorbestimmten Verstellwinkel des Auslegers bezüglich einer horizontalen Bezugsebene die Abstrahlrichtung und damit die Lichtabgabeachse auf das Personenaufnahmemittel ausgerichtet wird.

Eine andere Vorgehensweise zeichnet sich dadurch aus, wenn das zumindest eine weitere Leuchtmittel mit seiner Lichtabgabeachse derart gelenkig gelagert wird, dass die Abstrahlrichtung der Lichtabgabeachse räumlich verstellbar ist. Durch die räumliche Verstellmöglichkeit kann so eine noch universellere Einsatzmöglichkeit des zumindest einen weiteren Leuchtmittels geschaffen werden.

Weiters ist ein Vorgehen vorteilhaft, bei dem das zumindest eine weitere Leuchtmittel bei einer Fahrgeschwindigkeit von gleich oder kleiner 15 km/h oder nach dem Einschalten der Antriebseinheit für die Hubeinheit oder bei betätigter Feststellbremse vom Energieversorgungssystem mit Energie zur Abgabe von Lichtstrahlen versorgt wird. Damit kann automatisch von der Steuerungsvorrichtung je nach zutreffendem Auswahlkriterium das zumindest eine weitere Leuchtmittel automatisiert in Betrieb genommen werden, ohne dass eine Bedienperson einen Schaltvorgang durchführen muss.

Eine weitere vorteilhafte Vorgehensweise ist dadurch gekennzeichnet, dass die Steuerungsvorrichtung von ihrem Automatik-Modus in einen Manuell-Modus umgestellt wird und die Zufuhr von Energie aus dem Energieversorgungssystem zu dem zumindest einen weiteren Leuchtmittel mittels der Steuerungsvorrichtung manuell aktiviert oder manuell deaktiviert werden kann und/oder die Abstrahlrichtung der Lichtabgabeachse des zumindest einen weiteren Leuchtmittels mittels der Steuerungsvorrichtung manuell eingestellt werden kann. Durch eine gezielte Umstellung der Steuerungsvorrichtung in den manuellen Bedienmodus kann so von der Bedienperson abweichend von der hinterlegten Abstrahlrichtung oder den hinterlegten Abstrahlrichtungen diese im Bedarfsfall rasch an sich ändernde Einsatzbedingungen angepasst und umgestellt werden.

Vorteilhaft ist auch eine Verfahrensvariante, bei welcher zumindest eine optische Erfassungsvorrichtung bereitgestellt wird, mittels welcher zumindest einen optischen Erfassungsvorrichtung jener das Einsatzfahrzeug umgebende Raum, insbesondere jener oberhalb des Einsatzfahrzeugs befindliche Raum und/oder die Abstellfläche, erfasst und das erfasste Ist-Bild an eine Anzeigevorrichtung übertragen wird und an der Anzeigevorrichtung dargestellt wird. Damit kann der von dem zumindest einen weiteren Leuchtmittel beleuchtete Raum um das Einsatzfahrzeug herum auch bildlich erfasst und der Bedienperson an einer Anzeigevorrichtung zur Betrachtung bereitgestellt werden. So kann z.B. der Lenker des Einsatzfahrzeugs bereits bei einem Eintreffen am Einsatzort selbst das Suchen und Auswählen ohne weitere Hilfsperson durchführen.

Eine andere Vorgehensweise zeichnet sich dadurch aus, wenn das erfasste Ist-Bild an die Steuerungsvorrichtung übertragen wird und von dieser mittels eines Objekterkennungsmoduls der ein Hindernis bildende Gegenstand, insbesondere jener oberhalb des Einsatzfahrzeugs befindliche Gegenstand, ermittelt wird. Damit kann die Bedienperson, insbesondere der Lenker oder aber auch eine andere im Einsatzfall beteiligte Person, bei der raschen Hinderniserkennung auf elektronischem Wege unterstützt werden.

Eine weitere vorteilhafte Vorgehensweise ist dadurch gekennzeichnet, dass bei Ermitteln des oberhalb des Einsatzfahrzeugs befindlichen Gegenstandes von der Steuerungsvorrichtung ein Warnhinweis an der Anzeigevorrichtung angezeigt oder ein Warnton ausgegeben wird. Damit kann zusätzlich zur menschlichen optischen Kontrolle eine zusätzliche elektronische Überwachung und Unterstützung geschaffen werden.

Vorteilhaft ist auch eine Verfahrensvariante, bei welcher zumindest ein Blendschutzelement bereitgestellt wird, welches zumindest eine Blendschutzelement derart in den vom zumindest einen weiteren Leuchtmittel abgegebenen Lichtkegel hinein verstellt wird, dass ein Lichtzutritt in Richtung auf ein vom Drehgestell distanziert angeordnetes Ende des Auslegers, insbesondere in Richtung auf einen Korb oder eine Arbeitsbühne, verhindert wird. Damit kann ein Blenden von jenen im Personenaufnahmemittel befindlichen Personen verhindert werden. Eine andere Vorgehensweise zeichnet sich dadurch aus, wenn mehrere weitere Leuchtmittel vorgesehen werden und jedes der weiteren Leuchtmittel mit einem eigenen Stellantrieb in Antriebsverbindung steht und weiters mit der Steuerungsvorrichtung in Kommunikationsverbindung steht. Durch das Vorsehen mehrerer weiterer Leuchtmittel wird die Möglichkeit geschaffen, diese jeweils an zueinander unterschiedlichen Positionen am Einsatzfahrzeug anzuordnen und auch individuell jedes der weiteren Leuchtmittel in seiner Abstrahlrichtung auf den jeweils vorbestimmten Einsatzzweck vordefiniert einstellen zu können.

Eine weitere mögliche Vorgehensweise hat die Merkmale, dass das zumindest eine weitere Leuchtmittel an einem Drehgestell und/oder an einer Lafette und/oder an einem der Leiterteile eines Leitersatzes und/oder an einem der Teleskope einer Teleskopbühne und/oder dem Personenaufnahmemittel angeordnet wird. Damit kann eine an unterschiedliche Einsatzbedingungen und Einsatzzwecke angepasste Anordnung des oder der weiteren Leuchtmittel durchgeführt werden.

Weiters kann es vorteilhaft sein, wenn eine erste Detektionsvorrichtung zur Erfassung des elektromagnetischen Wechselfeldes von einer eine Wechselspannung führenden Leitung bereitgestellt wird und die erste Detektionsvorrichtung am Fahrzeugaufbau angeordnet wird. Damit kann bereits ausgehend vom Fahrzeugaufbau eine Detektion von Drähten oder Leitungen, welche eine Wechselspannung führen, durchgeführt werden.

Bei einer Verfahrensvariante ist vorgesehen, dass eine zweite Detektionsvorrichtung zur unmittelbaren Umfelderkennung des an der Hubeinheit befindlichen Personenaufnahmemittels, insbesondere den Rettungskorb, umgebenden Umfeldes bereitgestellt wird und die zweite Detektionsvorrichtung zur Erfassung des elektromagnetischen Wechselfeldes von einer eine Wechselspannung führenden Leitung ausgebildet ist und am Personenaufnahmemittel angeordnet wird. Durch die gegebenenfalls sensiblere Umfelderkennung der zumindest einen zweiten Detektionsvorrichtung kann so jener Bereich um das Personenaufnahmemittel herum auf das Vorhandensein von elektromagnetischen Wechselfeldern überwacht werden. Dies ist insbesondere dann von Vorteil, wenn sich Personen im Personenaufnahmemittel befinden und dieses verstellt wird.

Schließlich sieht eine andere Verfahrensvariante vor, dass zumindest ein Helligkeitssensor zur Ermittlung der Beleuchtungsstärke bereitgestellt wird und der ermittelte Ist-Wert an die Steuerungsvorrichtung weitergeleitet wird. Damit kann von der Steuerungsvorrichtung in Abhängigkeit vom ermittelten Ist-Wert die Inbetriebnahme des zumindest einen weiteren Leuchtmittels freigegeben oder aber auch unterbunden werden. Weiters könnte aber auch ein bereits im Betrieb befindliches weiteres Leuchtmittel in Abhängigkeit vom ermittelten Ist-Wert des Helligkeitssensors von der Steuerungsvorrichtung abgeschaltet werden. Der Soll-Wert der Beleuchtungsstärke oder eines anderen die Helligkeit beschreibenden Wertes ist wiederum in der Steuerungsvorrichtung hinterlegt. Die Schaltvorgänge erfolgen automatisch von der Steuerungsvorrichtung.

Zum besseren Verständnis der Erfindung wird diese anhand der nachfolgenden Figuren näher erläutert.

Es zeigen jeweils in stark vereinfachter, schematischer Darstellung:
- Fig. 1: ein Einsatzfahrzeug mit einer sich in der kompakten Transportstellung befindlichen Hubeinheit, in Seitenansicht;
- Fig. 2: das Einsatzfahrzeug nach Fig. 1, mit teilweise angehobener Hubeinheit, in Seitenansicht.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

Der Begriff "insbesondere" wird nachfolgend so verstanden, dass es sich dabei um eine mögliche speziellere Ausbildung oder nähere Spezifizierung eines Gegenstandes oder eines Verfahrensschritts handeln kann, aber nicht unbedingt eine zwingende, bevorzugte Ausführungsform desselben oder eine zwingende Vorgehensweise darstellen muss.

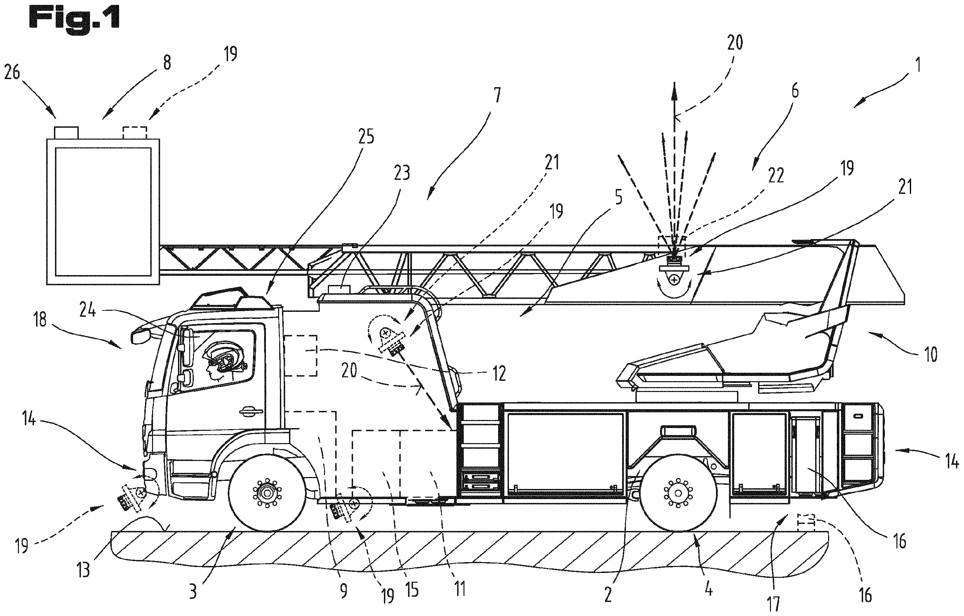

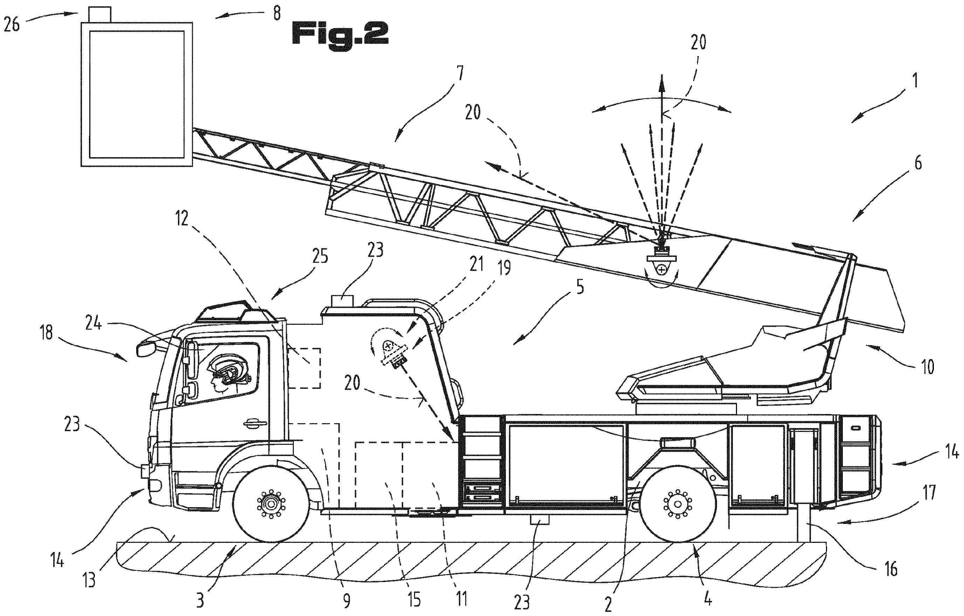

In den Fig. 1 und 2 ist vereinfacht ein Einsatzfahrzeug 1 gezeigt, welches als Hubrettungsfahrzeug bei der Feuerwehr oder anderen Hilfs- und/oder Rettungsorganisationen eingesetzt werden kann. Das Einsatzfahrzeug 1 kann auch nur zum Löscheinsatz dienen, wobei aber auch Personen- oder Tierrettungsmaßnahmen, technische Hilfeleistungen oder Katastropheneinsätze in verschiedensten Höhen oder Tiefen damit durchgeführt werden können. Derartige Fahrzeuge werden auch als Kraftfahrzeuge bezeichnet, wobei unter dem Begriff "Kraftfahrzeug" jegliches Fahrzeugt verstanden wird, welches zumindest eine Antriebsquelle zu dessen Fortbewegung umfasst. Das Einsatzfahrzeug 1 ist als Feuerwehrfahrzeug, oder Feuerlöschfahrzeug ausgebildet.

Im vorliegenden Ausführungsbeispiel ist das Einsatzfahrzeug 1 als Lastkraftwagen ausgebildet und kann ein Fahrgestell 2 mit zumindest einem daran angeordneten Vorderradpaar 3 und zumindest einem Hinterradpaar 4 umfassen. Das Einsatzfahrzeug 1 umfasst weiters einen Fahrzeugaufbau 5 sowie eine darauf oder eine daran angeordnete Hubeinheit 6. Die Hubeinheit 6 kann einen Ausleger 7, welcher z.B. als Drehleiter, Teleskopmast, Teleskopzylinder, Gelenkmast oder Lichtmast ausgebildet ist, umfassen.

Anstelle des Auslegers 7 kann aber auch eine Bühne, wie z.B. eine Scherenbühne, ein Scherenhubsystem oder eine Hubarbeitsbühne, vorgesehen sein, welche einen Teil der Hubeinheit 6 bildet. Die Hubeinheit 6 kann aus den unterschiedlichsten Einheiten oder Baukomponenten gebildet sein. Je nach Art und Form des Auslegers 7 kann an seinem bevorzugt äußersten Ende oder Endabschnitt auch noch ein Personenaufnahmemittel 8, wie z.B. eine Arbeitsbühne oder ein Rettungskorb, angeordnet sein.

Zum Antrieb zumindest eines Radpaares 3, 4 ist ein Fahrantrieb 9 vorgesehen, welcher durch unterschiedlichste Antriebsaggregate gebildet sein kann.

Im vorliegenden Ausführungsbeispiel ist die Hubeinheit 6 des Einsatzfahrzeugs 1 durch den Ausleger 7, nämlich durch eine Drehleiter, und einen Rettungskorb gebildet, wobei aber auch davon abweichende Ausführungsformen möglich sind. Der hier als Drehleiter ausgebildete Ausleger 7 kann durch einen Leitersatz aus mehreren einzelnen Leitern gebildet sein.

Die Hubeinheit 6 umfasst hier weiters eine Dreh- bzw. Schwenkanordnung, mittels welcher der Ausleger 7, insbesondere die Drehleiter, der Teleskopmast oder der Gelenkmast, entsprechend verstellt werden kann. Die Dreh- bzw. Schwenkanordnung kann auch als Drehgestell 10 bezeichnet werden. Es wäre aber auch noch möglich, auch die zuvor beschriebene Bühne mittels dem als Dreh- bzw. Schwenkanordnung ausgebildeten Drehgestell 10 am Fahrgestell 2 und/oder dem Fahrzeugaufbau 5 anzuordnen und zu halten.

Weiters kann das Einsatzfahrzeug 1 noch zumindest eine Antriebseinheit 11 für die Hubeinheit 6 und eine Steuerungsvorrichtung 12 umfassen. Bei der Antriebseinheit 11 kann es sich um ein eigenes autarkes Antriebsaggregat oder aber auch um ein vom Fahrantrieb 9 mit Antriebsenergie versorgtes Antriebsaggregat handeln.

Für die Beleuchtung während des Fahrbetriebs des Einsatzfahrzeugs 1 sowie die Beleuchtung einer Abstellfläche 13 oder einer Aufstandsfläche um das Einsatzfahrzeug 1 können die unterschiedlichsten aus dem Stand der Technik bekannten Leuchtmittel 14 eingesetzt werden. All diese Leuchtmittel 14 werden nachfolgend generell als erste Leuchtmittel 14 bezeichnet. Dabei kann es sich um Scheinwerfer oder andere bevorzugt sichtbares Licht abgebende Lichtquellen handeln. Die Beleuchtung der Abstellfläche 13 bzw. der Abstütz- oder Aufstandsfläche für das Einsatzfahrzeug 1 sowie jenem das Einsatzfahrzeug 1 umgebende Umfeld kann auch als Abstellflächenbeleuchtung oder Umfeldbeleuchtung bezeichnet werden. Dazu kann z.B. ein Lichtmast aus dem Fahrzeugaufbau 5 auf die von der Abstellfläche 13 abgewendete Seite ausgefahren werden.

Das Einsatzfahrzeug 1 kann auch noch ein Energieversorgungssystem 15 für das oder die ersten Leuchtmittel 14 umfassen, welches elektrische Energie je nach Bedarf für die unterschiedlichsten ersten Leuchtmittel 14 bereitstellt oder liefert. Dabei kann es sich um Generatoren, Batterien oder andere Energiespeicher handeln.

Das Einsatzfahrzeug 1 ist grundsätzlich für den Betrieb in zueinander unterschiedlichen Betriebszuständen geeignet oder dazu ausgebildet und kann in diesen Betriebszuständen betrieben werden. Einen ersten Betriebszustand kann z.B. der Fahrbetrieb mittels des Fahrantriebs 9 zum Einsatzort darstellen. In einem zweiten Betriebszustand kann z.B. das Suchen, Auswählen und positionierte Abstellen des Einsatzfahrzeugs 1 an der am Einsatzort ausgewählten und festgelegten Abstellfläche 13 erfolgen oder durchgeführt werden. Dabei sind kaum oder nur geringe Fahrstrecken mit geringer Fahrgeschwindigkeit zurückzulegen.

Ist dies erfolgt, kann das Einsatzfahrzeug 1 in einem dritten Betriebszustand betrieben werden, in welchem das Ausfahren und Positionieren von Stützarmen 16 einer Abstützvorrichtung 17 des Einsatzfahrzeugs 1 oberhalb der ausgewählten Abstellfläche 13 sowie weiters das in Kontakt bringen der Stützarme 16 mit der Abstellfläche 13 erfolgt oder durchgeführt wird. Nach erfolgreicher und sicherer Abstützung des Einsatzfahrzeugs 1 an der Abstellfläche 13 kann die Hubeinheit 6 in Betrieb genommen werden, wobei dann das Verstellen der Hubeinheit 6, insbesondere deren Ausleger 7 oder deren Bühne, ausgehend von ihrer während der Hinfahrt zum Einsatzort befindlichen kompakten Transportstellung in eine Einsatzstellung durchgeführt wird. Dieser Betrieb stellt einen vierten Betriebszustand des Einsatzfahrzeugs 1 dar.

Weiters kann das Einsatzfahrzeug 1, insbesondere deren Fahrzeugaufbau 5, auch noch eine Fahrerkabine 18, einen oder mehrere Gerätekästen, ein Podium, eine Lafette oder dergleichen umfassen.

Um bei Dunkelheit und/oder schlechten Sicht- oder Lichtbedingungen auch die Umgebung des Einsatzfahrzeugs 1, insbesondere jenen oberhalb des Einsatzfahrzeugs 1 befindlichen Raum und/oder die Abstellfläche (13) beleuchten zu können, ist insbesondere direkt an der Hubeinheit 6, insbesondere deren Ausleger 7, zumindest ein eigenes oder weiteres Leuchtmittel 19 angeordnet oder vorgesehen. Das zumindest eine weitere Leuchtmittel 19 kann z.B. als Scheinwerfer mit einer oder mehreren LED-Lichtquellen ausgebildet sein und seinerseits eine Lichtabgabeachse 20 definieren oder diese im Leuchtbetrieb ausbilden. Die Lichtabgabeachse 20 ist oder die Lichtabgabeachsen 20 sind dabei je nach der in der Steuerungsvorrichtung 12 hinterlegten Abstrahlrichtung auf die von der Abstellfläche 13 abgewendete Richtung und damit in Richtung auf den Himmel ausgerichtet.

Bevorzugt sind jedoch mehrere weitere Leuchtmittel 19 vorgesehen, deren Lichtabgabeachsen 20 jeweils in die in der Steuerungsvorrichtung 12 hinterlegten Abstrahlrichtung, wie z.B. auf die von der Abstellfläche 13 abgewendete Seite und in Richtung auf die Abstellfläche 13, ausgerichtet sind. Bei einer in etwa horizontalen Ausrichtung des Einsatzfahrzeugs 1 ist die Lichtabgabeachse 20 oder sind die Lichtabgabeachsen 20 im Wesentlichen in vertikaler Richtung ausgehend vom zumindest einen weiteren Leuchtmittel 19 nach oben ausgerichtet. Von dem zumindest einen weiteren Leuchtmittel 19 wird üblicher Weise ein gerichteter oder gebündelter Lichtkegel abgegeben, in dessen Hauptstrahlungsrichtung auch die Lichtabgabeachse 20 ausgerichtet verläuft. Der oder die Lichtkegel sind an die jeweiligen Anforderungen vorbestimmt anzupassen oder aber verstellbar bei dem oder den weiteren Leuchtmitteln 19 auszuführen. Sind mehrere der weiteren Leuchtmittel 19 vorgesehen, können die von jedem weiteren Leuchtmittel 19 abgestrahlten Lichtkegel derart zueinander ausgerichtet werden, dass diese einen gemeinsamen Leuchtkegel bilden.

Für das oder die weiteren Leuchtmittel 19 kann jeweils in der Steuerungsvorrichtung 12 die dafür vorgesehene Abstrahlrichtung hinterlegt und abgespeichert sein.

Da beim Hochfahren oder Hochschwenken der Hubeinheit 6, insbesondere wenn diese als Ausleger 7 ausgebildet ist, sich die zuvor zumeist parallel bezüglich der Abstellfläche 13 verlaufende Längsausrichtung ändert, würde bei einer fixen und starren Anbringung die Lichtabgabeachse 20 des zumindest einen weiteren Leuchtmittels 19 ebenfalls bezüglich der ortsfesten Abstellfläche 13 verschwenkt werden. Dies hätte zur Folge, dass nicht mehr der direkt oberhalb des Einsatzfahrzeugs 1 befindliche Raum beleuchtet und angestrahlt wird, sondern ein sich daneben befindlicher Raum. Um dies zu vermeiden, ist das weitere Leuchtmittel 19 oder sind die weiteren Leuchtmittel 19 an der als Ausleger 7 oder Bühne ausgebildeten Hubeinheit 6 schwenkbar gelagert. Damit wird es möglich, die jeweilige Lichtabgabeachse 20 des weiteren Leuchtmittels 19 an die im Einsatzfall benötigte Abstrahlrichtung auszurichten. Weiters oder zusätzlich könnte noch vorgesehen sein, dass die Lagerung des zumindest einen weiteren Leuchtmittels 19 derart ausgebildet und konstruktiv so ausgestaltet wird, dass auch eine räumliche Verstellung der Lichtabgabeachse 20 erfolgen kann und möglich wird. Dazu können alle aus dem Stand der Technik bekannten Vorrichtungen oder Stelleinheiten eingesetzt werden. Da dies als bekannt angesehen wird, wird dazu nicht mehr näher eingegangen.

Zusätzlich steht das weitere Leuchtmittel 19 oder stehen die weiteren Leuchtmittel 19 jeweils mit einem oder mehreren Stellantrieben 21 in Antriebsverbindung. Unter Antriebsverbindung wird dabei jegliche Übertragung eines Antriebsmoments oder einer Antriebskraft ausgehend vom Stellantrieb 21 auf das jeweilige weitere Leuchtmittel 19 verstanden. Der oder die Stellantriebe 21 können unterschiedlichst ausgebildet sein und mit den verschiedensten Antriebsmedien angetrieben werden. Als Antriebsmedium kann z.B. elektrischer Strom, Hydraulik, Pneumatik oder dergleichen Verwendung finden. Es ist hier keine händische Verstellbewegung vorgesehen, sondern eine solche, bei welcher jeder der Stellantriebe 21 die durchzuführende Stellbewegung mittels eines von der Steuerungsvorrichtung 12 abgegebenen Stellbefehls erhält und die Stellbewegung dann auch vom Stellantrieb 21 mit dessen Antriebsmittel oder Antriebsmedium durchgeführt wird.

Damit wird es möglich mittels der Steuerungsvorrichtung 12 den oder die Stellantriebe 21 so zu verstellen, dass auch bei einer relativen Verlagerung des Auslegers 7 oder der Bühne die Lichtabgabeachse 20 oder die Lichtabgabeachsen 20 im Wesentlichen in vertikaler Richtung nach oben ausgerichtet wird oder werden. Dies wird auch noch beim Beginn des vierten Betriebszustandes und/oder auch während des vierten Betriebszustandes durchgeführt. So ist gewährleistet, dass auch bei Verlagerungen des Auslegers 7 bezüglich seines Neigungswinkels relativ zum ortsfest positioniert ausgerichteten Fahrgestell 2 jener sich in vertikaler Richtung oberhalb des Einsatzfahrzeugs 1 befindliche Raum beleuchtet oder ausgeleuchtet werden kann.

Die Abstrahlrichtung der Lichtabgabeachse 20 des zumindest einen weiteren Leuchtmittels 19 wird am Beginn des Betriebs des Einsatzfahrzeugs 1 in seinem zweiten Betriebszustand oder am Beginn des Betriebs des Einsatzfahrzeugs 1 in seinem dritten Betriebszustand grundsätzlich auf die von der Abstellfläche 13 abgewendete Seite ausgerichtet. In diesen Betriebszuständen ist die Lichtabgabeachse 20 im Wesentlichen in vertikaler Richtung nach oben ausgerichtet.

Das zumindest eine weitere Leuchtmittel 19 steht einerseits mit dem jeweiligen Stellantrieb 21 in Antriebsverbindung sowie andererseits mit der Steuerungsvorrichtung 12 in Kommunikationsverbindung. Unter einer Kommunikationsverbindung wird jegliche Weiterleitung oder Übermittlung von Befehlen und/oder Steuersignalen und/oder Daten verstanden, wobei dies leitungsgebunden und/oder drahtlos erfolgen kann. In der Steuerungsvorrichtung 12 ist für jeden Betriebszustand des Einsatzfahrzeugs 1 für das zumindest eine weitere Leuchtmittel 19 die Ausrichtung der Lichtabgabeachse 20 und damit die Abstrahlrichtung hinterlegt. Grundsätzlich ist hier vorgesehen, dass in der Steuerungsvorrichtung 12 ein Automatik-Modus für das zumindest eine weitere Leuchtmittel 19 eingestellt oder bereitgestellt ist.

Weiters kann noch vorgesehen sein, dass die Lichtabgabeachse 20 des zumindest einen weiteren Leuchtmittels 19 ausgehend von der in vertikaler Richtung nach oben ausgerichteten Abstrahlrichtung um einen in der Steuerungsvorrichtung 12 hinterlegten Schwenkwinkel verschwenkt wird. Wenn die vertikale Abstrahlrichtung nach oben mit dem Wert null versehen wird, soll dann der Schwenkwinkel jener Verstellwinkel sein, um welchen die Lichtabgabeachse 20 bezüglich der Lotrechten verstellt wird. So kann z.B. der Schwenkwinkel symmetrisch oder unsymmetrisch bezüglich der vertikalen Abstrahlrichtung nach oben ausgewählt und in der Steuerungsvorrichtung 12 hinterlegt sein. Der Schwenkwinkel kann z.B. jeweils bis zu 45° und auch mehr betragen. Weiters kann das zumindest eine weitere Leuchtmittel 19 ständig innerhalb des vorbestimmten oder festgelegten Schwenkwinkelbereichs von der Steuerungsvorrichtung 12 mittels des Stellantriebs 21 verschwenkt werden.

Es ist vorgesehen, dass auch noch beim Beginn des vierten Betriebszustandes und/oder auch während des vierten Betriebszustandes die Lichtabgabeachse 20 im Wesentlichen in vertikaler Richtung nach oben ausgerichtet wird. Alternativ oder zusätzlich dazu wird im vierten Betriebszustand beim Verstellen der Hubeinheit 6 die Lichtabgabeachse 20 des zumindest einen weiteren Leuchtmittels 19 von der Steuerungsvorrichtung 12 in Richtung auf das an der Hubeinheit 6 befindliche Personenaufnahmemittel 8, insbesondere den Rettungskorb, ausgerichtet. Damit kann die unmittelbare Umgebung um das Personenaufnahmemittel 8 ausgeleuchtet werden. Dies ist in der Fig. 2 angedeutet.

Das Ausrichten der Lichtabgabeachse 20 des zumindest einen weiteren Leuchtmittels 19 in Richtung auf das Personenaufnahmemittel 8, insbesondere den Rettungskorb, kann z.B. auch erst bei einem Hochschwenken der Hubeinheit 6, insbesondere deren Ausleger, um einen Verstellwinkel von 15° bezüglich einer Horizontalebene durchgeführt werden.

Zusätzlich wird die Abstrahlrichtung der Lichtabgabeachse 20 des zumindest einen weiteren Leuchtmittels 19 am Beginn des Betriebs des Einsatzfahrzeugs 1 in seinem zweiten Betriebszustand und/oder am Beginn des Betriebs des Einsatzfahrzeugs 1 in seinem dritten Betriebszustand in Richtung auf die Abstellfläche 13 ausgerichtet. Damit kann die Suche, das Auswählen und das Festlegen des Einsatzfahrzeugs 1 am Einsatzort auch noch erleichtert werden. So kann z.B. in der Steuerungsvorrichtung 12 hinterlegt sein, dass zumindest eine der Lichtabgabeachsen 20 zuerst in Richtung auf die Abstellfläche 13 ausgerichtet wird und nach erfolgter Auswahl des Aufstellungsortes oder aber erst nach dem Abstützen der Stützarme 16 an der Abstellfläche 13 auf die von der Abstellfläche 13 abgewendete Seite oder Richtung umgestellt wird. Sind mehrere der weiteren Leuchtmittel 19 vorgesehen, kann zumindest eines derselben in Richtung auf die Abstellfläche 13 ausgerichtet und zumindest ein anderes der weiteren Leuchtmittel 19 auf die von der Abstellfläche 13 abgewendete Seite automatisch ausgerichtet werden. Es könnte aber auch zumindest eines der weiteren Leuchtmittel 19 von der Steuerungsvorrichtung so automatisch eingestellt und ausgerichtet werden, dass die Abstrahlrichtung entgegen der üblichen Fahrtrichtung ausgerichtet ist und somit dieses nach hinten leuchtet. Damit kann zumindest ein zusätzlicher Rückfahrscheinwerfer geschaffen werden, welcher bei schlechten und unzureichenden Lichtverhältnissen, insbesondere im zweiten Betriebszustand, eine bessere Ausleuchtung des Heckbereichs ermöglicht. Damit kann je nach Anordnung und Ausrichtung der Abstrahlrichtung eine bessere Ausleuchtung erzielt werden.

Ist die Hubeinheit 6 als Ausleger 7 ausgebildet, umfasst der Ausleger 7 zumeist mehrere Auslegerarme. Ist der Ausleger 7 durch einen Leitersatz gebildet, bilden diese die Auslegerarme und sind relativ zueinander in Richtung von deren Längserstreckung zueinander verstellbar oder verlagerbar. Jener Leiterteil, welcher am Drehgestell 10 schwenkbar gelagert ist, kann als Unterleiter, Basisleiter oder als letzter Leiterteil bezeichnet werden.

Es wäre aber noch möglich, dass der Ausleger 7 durch einen Teleskopmast oder einen Gelenkmast mit mehreren Auslegerarmen gebildet ist. Bei der Ausbildung des Auslegers 7 als Gelenkmast kann auch zumindest einer der Auslegerarme, insbesondere jener der dem Drehgestell 10 am nächsten liegend angeordnet und auch an diesem gehalten ist, als Teleskopmast oder Teleskopausleger ausgebildet sein.

Bei diesen zuvor beispielhaft beschriebenen Ausbildungen des Auslegers 7 soll bevorzugt das zumindest eine weitere Leuchtmittel 19 an jenem dem Drehgestell 10 nächstliegend angeordneten Auslegerarm angeordnet sein. Dieser nächstliegend angeordnete Auslegerarm ist auch mit dem Drehgestell 10 verbunden und schwenkbar an diesem angelenkt. Das zumindest eine weitere Leuchtmittel 19 kann aber auch an jedem anderen Leiterteil oder Korbarm oder Teleskopteil angeordnet und gehalten werden.

Das weitere Leuchtmittel 19 wird oder die weiteren Leuchtmittel 19 werden bei sich im zweiten Betriebszustand und/oder im dritten Betriebszustand befindlichen Einsatzfahrzeug 1 vom Energieversorgungssystem 15 mit Energie zur Abgabe von Lichtstrahlen versorgt. Diese Freigabe der Energieversorgung erfolgt bei sich im Automatik-Modus befindlicher Steuerungsvorrichtung 12 automatisch von dieser. Wie bereits zuvor beschrieben, wird auch noch die Lichtabgabeachse 20 und damit die Abstrahlrichtung des zumindest einen weiteren Leuchtmittels 19 in Abhängigkeit vom Betriebszustand des Einsatzfahrzeugs 1 automatisch von der Steuerungsvorrichtung 12 eingestellt und ausgerichtet.

Die Freigabe kann auch noch insbesondere nach dem Einschalten der Antriebseinheit 11 für die Hubeinheit 6 oder bei betätigter Feststellbremse erfolgen. Dazu wird mittels der Steuerungsvorrichtung 12 der Schaltvorgang oder werden die Schaltvorgänge eingeleitet und/oder durchgeführt und/oder überwacht.

Es wäre aber auch noch möglich, dass das zumindest eine weitere Leuchtmittel 19 bei einer Fahrgeschwindigkeit von gleich oder kleiner 15 km/h, wir dies z.B. am Ende der Anfahrt zum Einsatzort und am Beginn des zweiten Betriebszustandes der Fall ist, bereits von der Steuerungsvorrichtung 12 zur Abgabe von Lichtstrahlen automatisch eingeschaltet wird. Die zum Schaltvorgang maßgebliche Fahrgeschwindigkeit kann z.B. auch 10 km/h oder aber auch größer als 15 km/h, z.B. 20 km/h, betragen. Das Ende des ersten Betriebszustands ist der Steuerungsvorrichtung 12 beim Erreichen des Einsatzorts auf manuellem Weg durch einen eigenen Eingabebefehl bekannt zu geben oder mittels eines Umschaltvorgangs durchzuführen. Damit ist die Steuerungsvorrichtung 12 in deren Automatik-Modus umgestellt. Dies ist deshalb durchzuführen, damit bei der Anfahrt zum Einsatzort bei einem verkehrsbedingten Anhalten des Einsatzfahrzeugs 1 oder einer Langsamfahrt das zumindest eine weitere Leuchtmittel 19 nicht automatisch eingeschaltet und nach dem Anfahren und Überschreiten der festgelegten Fahrgeschwindigkeit wieder ausgeschaltet wird. Der zweite Betriebszustand und gegebenenfalls auch der oder die weiteren Betriebszustände ist oder sind der Steuerungsvorrichtung 12 vom Bediener mitzuteilen oder ist diese in den jeweiligen Modus manuell umzustellen.

Weiters kann in der Steuerungsvorrichtung 12 noch hinterlegt sein, dass beim Überschreiten des vorbestimmten und in der Steuerungsvorrichtung 12 hinterlegten Wertes der Fahrgeschwindigkeit, wie z.B. 10 km/h, 15 km/h oder 20 km/h, das zumindest eine weitere Leuchtmittel 19 automatisch von der Steuerungsvorrichtung 12 abgeschaltet wird. Dies soll jedoch nur bei im Automatik-Modus befindlicher oder betriebener Steuerungsvorrichtung 12 erfolgen.

Der zuvor beschriebene Automatik-Modus der Steuerungsvorrichtung 12 könnte aber auch durch eine Bedienperson in einen Manuell-Modus umgestellt werden. So könnte die Zufuhr von Energie aus dem Energieversorgungssystem 15 zu dem zumindest einen weiteren Leuchtmittel 19 mittels eines Eingabebefehls in die Steuerungsvorrichtung 12 dann von dieser manuell aktiviert oder manuell deaktiviert werden. Befindet sich die Steuerungsvorrichtung 12 im Manuell-Modus könnte aber auch die Abstrahlrichtung der Lichtabgabeachse 20 des zumindest einen weiteren Leuchtmittels 19 durch einen separaten Eingabebefehl mittels der Steuerungsvorrichtung 12 manuell eingestellt werden.

Um bei ausreichender Helligkeit eine automatische Inbetriebnahme des zumindest einen weiteren Leuchtmittels 19 zu vermeiden oder zu verhindern, kann zumindest ein zusätzlicher Helligkeitssensor vorgesehen werden. Damit kann z.B. die Beleuchtungsstärke (lx) ermittelt werden und der ermittelte Ist-Wert an die Steuerungsvorrichtung 12 weitergeleitet werden. In Abhängigkeit vom ermittelten Ist-Wert wird von der Steuerungsvorrichtung 12 die Inbetriebnahme freigegeben oder aber auch unterbunden. Weiters könnte aber ein bereits im Betrieb befindliches weiteres Leuchtmittel 19 in Abhängigkeit vom ermittelten Ist-Wert des Helligkeitssensors von der Steuerungsvorrichtung 12 abgeschaltet werden. Dazu steht der Helligkeitssensor mit der Steuerungsvorrichtung 12 in Kommunikationsverbindung.

Es wäre auch noch möglich, mittels einer optischen Erfassungsvorrichtung 23, wie z.B. einer Kamera oder einem Fotoapparat, ein digitales Ist-Bild oder digitale Ist-Bilder von jenem insbesondere oberhalb des Einsatzfahrzeugs 1 befindlichen Raum zu erfassen. Das oder die erfassten Ist-Bilder können an eine Anzeigevorrichtung 24 übertragen werden und dort für eine Person angezeigt und dargestellt werden. Dabei kann es sich um Einzelbilder oder um eine Art von Film handeln.

Das Ist-Bild oder die Ist-Bilder können aber auch an die Steuerungsvorrichtung 12 übertragen werden. Von dieser kann dann mittels eines Objekterkennungsmoduls ein möglicher sich oberhalb des Einsatzfahrzeugs 1 befindlicher Gegenstand, insbesondere ein Ast, ein vorkragender Gebäudeteil, ein Draht, ein Leitungsdraht zur Stromführung oder dergleichen, ermittelt werden. Wird vom Objekterkennungsmodul ein Gegenstand, insbesondere ein Draht oder dergleichen, ermittelt oder erkannt, kann dann von der der Steuerungsvorrichtung 12 ein Warnhinweis an der Anzeigevorrichtung 24 angezeigt und/oder ein Warnton ausgegeben werden. Die Auswertung des Ist-Bildes oder der Ist-Bilder kann z.B. mittels Algorithmen zur Kantenextraktion (z.B. Canny-Algorithmus) und/oder Geradenschätzung (z.B. Hough-Transformation oder Randomized-Hough-Transform) durchgeführt werden.

Es können auch mehrere Erfassungsvorrichtungen 23 vorgesehen werden, welche auf die unterschiedlichsten Umgebungsorte des Einsatzfahrzeugs 1 ausgerichtet sein können. Eine weitere derselben ist in der Fig. 2 im Bereich der Unterseite des Fahrgestells 2 schematisch angedeutet. Damit wird es möglich, nicht nur den sich oberhalb des Einsatzfahrzeugs 1 befindlichen Raum bildlich zu erfassen, sondern auch noch die Abstellfläche 13. Die Anordnung und Befestigung der Erfassungsvorrichtung 23 oder der Erfassungsvorrichtungen 23, welche auch als Bilderfassungsvorrichtungen bezeichnet werden können, kann starr oder schwenkbar ausgeführt sein. Sollte eine Verstellmöglichkeit vorgesehen sein, könnte zumindest einer der Erfassungsvorrichtungen 23 ein nicht näher dargestelltes und bezeichnetes Stellorgan zugeordnet sein und damit in Antriebsverbindung stehen. Das oder die Stellorgane könnten auch noch mit der Steuerungsvorrichtung 12 in Kommunikationsverbindung stehen. So kann der Erfassungsbereich und damit die Erfassungsrichtung der Erfassungsvorrichtung 23 oder der Erfassungsvorrichtungen 23 z.B. automatisiert auf jeweils die in der Steuerungsvorrichtung 12 hinterlegte Erfassungsrichtung ausgerichtet und eingestellt werden. Es wäre aber auch eine Umstellung des Automatik-Modus in einen Manuell-Modus möglich, um so der Bedienperson eine individuelle Einstellung der Erfassungsrichtung zu ermöglichen.

Weiters kann noch zumindest ein Blendschutzelement 22 vorgesehen oder bereitgestellt werden. Unter Blendschutzelement 22 wird jeglicher Bauteil oder jegliche Vorrichtung verstanden, welche in den vom zumindest einen weiteren Leuchtmittel 19 abgebbaren Lichtkegel hineinragt und damit in gewissen Grenzen den Leucht- oder Lichtkegel in einem vorbestimmten Bereich begrenzt. So kann z.B. jener Bereich von einer Beleuchtung und der damit möglichen verbundenen Blendwirkung der dort befindlichen Person oder den Personen abgeschattet werden. Das Blendschutzelement 22 oder die Blendschutzelemente 22 können entweder fix und voreingestellt oder aber auch manuell einstellbar an dem zumindest einen weiteren Leuchtmittel 19 angeordnet sein.

So kann das zumindest eine Blendschutzelement 22 derart in den vom zumindest einen weiteren Leuchtmittel 19 abgegebenen Lichtkegel hinein verstellt werden, dass ein Lichtzutritt in Richtung auf ein vom Drehgestell 10 distanziert angeordnetes Ende des Auslegers 7, insbesondere in Richtung auf einen Korb oder eine Arbeitsbühne, verhindert wird oder verhindert werden kann.

Es können auch mehrere der weiteren Leuchtmittel 19 vorgesehen werden. Es kann auch noch das zumindest eine weitere Leuchtmittel 19 am Drehgestell 10 und/oder einer Lafette und/oder an einer Unterleiter eines Leitersatzes und/oder dem Personenaufnahmemittel 8 und/oder dem Fahrzeugaufbau 5 und/oder an einem der Teleskope einer Teleskopbühne angeordnet werden. Die Lafette stellt üblicherweise jenen Teil der Hubeinheit 6 dar, welcher einerseits fest mit dem Leitersatz, insbesondere der Unterleiter oder dem letzten Leiterteil, verbunden ist und andererseits am Drehgestell 10 schwenkbar gelagert ist. Das Drehgestell 10 stellt zumeist jenen Teil der Hubeinheit 6 dar, welcher zwischen einer nicht näher bezeichneten Terrainplatte und der Lafette angeordnet ist. Die Terrainplatte selbst ist zumeist drehbar am Unterbau und/oder am Fahrgestell 2 gelagert.

Zusätzlich zu dem oder den weiteren Leuchtmitteln 19 könnte aber auch zumindest eine erste Detektionsvorrichtung 25 zur Erfassung des elektrischen Wechselfeldes, welches von einer eine Wechselspannung führenden Leitung aufgebaut wird, vorgesehen werden. Eine derartige erste Detektionsvorrichtung 25 könnte z.B. am Fahrzeugaufbau, insbesondere dem Dach der Fahrerkabine 18, angeordnet oder vorgesehen werden. Der Erfassungsbereich kann dabei bis zu 40m oder auch mehr betragen und auf Induktion beruhen.

Unabhängig davon oder zusätzlich dazu könnte aber auch noch zumindest eine zweite Detektionsvorrichtung 26 vorgesehen werden. Die zweite Detektionsvorrichtung 26 dient zur Umfelderkennung jenes Umgebungsfeldes oder Umgebungsbereichs, welcher das Personenaufnahmemittel 8, insbesondere den Rettungskorb, unmittelbar umgibt. Dazu ist die zweite Detektionsvorrichtung 26 bevorzugt am Personenaufnahmemittel 8 angeordnet und weist zumeist einen Erfassungsbereich bis zu 10m auf. Von dieser zweiten Detektionsvorrichtung 26 können ebenfalls elektrische Wechselfelder, welche von einer in den Leitungen geführten Wechselspannung aufgebaut werden, erfasst und ermittelt werden. Dabei kann es sich ebenfalls um ein auf Induktion beruhendes System handeln.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

### Bezugszeichenaufstellung

- 1: Einsatzfahrzeug
- 2: Fahrgestell
- 3: Vorderradpaar
- 4: Hinterradpaar
- 5: Fahrzeugaufbau
- 6: Hubeinheit
- 7: Ausleger
- 8: Personenaufnahmemittel
- 9: Fahrantrieb
- 10: Drehgestell
- 11: Antriebseinheit
- 12: Steuerungsvorrichtung
- 13: Abstellfläche
- 14: erste Leuchtmittel
- 15: Energieversorgungssystem
- 16: Stützarm
- 17: Abstützvorrichtung
- 18: Fahrerkabine
- 19: weiteres Leuchtmittel
- 20: Lichtabgabeachse
- 21: Stellantrieb
- 22: Blendschutzelement
- 23: Erfassungsvorrichtung
- 24: Anzeigevorrichtung
- 25: erste Detektionsvorrichtung
- 26: zweite Detektionsvorrichtung

## Patentansprüche

1. Verfahren zur Beleuchtung eines Umgebungsbereichs eines als Hubrettungsfahrzeug der Feuerwehr ausgebildeten Einsatzfahrzeugs (1) und zur optischen Erkennung eines ein Hindernis bildenden Gegenstandes, wie eines Astes, eines vorkragenden Gebäudeteils, eines Drahtes, eines elektrischen Strom führenden Leitungsdrahtes, oberhalb des Einsatzfahrzeugs (1), bei dem folgende Schritte durchgeführt werden:
- Bereitstellen des Einsatzfahrzeugs (1) umfassend
- ein Fahrgestell (2),
- einen Fahrzeugaufbau (5),
- eine Hubeinheit (6), welche als Ausleger (7) oder Bühne ausgebildet ist,
- eine Steuerungsvorrichtung (12) zur Steuerung und Überwachung des Betriebs des Einsatzfahrzeugs (1) in seinen Betriebszuständen,
- ein Energieversorgungssystem (15) zur Abgabe elektrischer Energie,
- mehrere erste Leuchtmittel (14), welche zumindest für die Beleuchtung des Einsatzfahrzeugs (1) während dessen Fahrbetrieb dienen,
- zumindest ein weiteres Leuchtmittel (19) mit einer Lichtabgabeachse (20), wobei das zumindest eine weitere Leuchtmittel (19) zumindest an der als Ausleger (7) oder Bühne ausgebildeten Hubeinheit (6) verschwenkbar angeordnet wird,
- Bereitstellen zumindest eines Stellantriebs (21), wobei der zumindest eine Stellantrieb (21) mit dem zumindest einen weiteren Leuchtmittel (19) in Antriebsverbindung steht und weiters der zumindest eine Stellantrieb (21) mit der Steuerungsvorrichtung (12) in Kommunikationsverbindung steht,
- Hinfahren des Einsatzfahrzeugs (1) zu einem Einsatzort, wobei das Einsatzfahrzeug (1) in seinem ersten Betriebszustand betrieben wird, bei welchem ersten Betriebszustand sich die als Ausleger (7) oder Bühne ausgebildete Hubeinheit (6) in einer kompakten Transportstellung am Einsatzfahrzeug (1) befindet,
- Suchen, Auswählen sowie positioniertes Abstellen des Einsatzfahrzeugs (1) an einer am Einsatzort ausgewählten und festgelegten Abstellfläche (13), wobei das Einsatzfahrzeug (1) in seinem zweiten Betriebszustand betrieben wird,
- gegebenenfalls Ausfahren und Positionieren von Stützarmen (16) einer Abstützvorrichtung (17) des Einsatzfahrzeugs (1) oberhalb der ausgewählten Abstellfläche (13), sowie in Kontakt bringen der Stützarme (16) mit der Abstellfläche (13) und Abstützen des Einsatzfahrzeugs (1) mittels der Stützarme (16) an der Abstellfläche (13), wobei das Einsatzfahrzeug (1) in seinem dritten Betriebszustand betrieben wird,
- Verstellen der als Ausleger (7) oder Bühne ausgebildeten Hubeinheit (6) mittels einer Antriebseinheit (11) ausgehend von ihrer während der Hinfahrt zum Einsatzort befindlichen kompakten Transportstellung in eine Einsatzstellung, wobei das Einsatzfahrzeug (1) in seinem vierten Betriebszustand betrieben wird,
**dadurch gekennzeichnet,**
- **dass** von der Steuerungsvorrichtung (12) am Beginn des Betriebs des Einsatzfahrzeugs (1) in seinem zweiten Betriebszustand oder gegebenenfalls am Beginn des Betriebs des Einsatzfahrzeugs (1) in seinem dritten Betriebszustand die Energieversorgung vom Energieversorgungssystems (15) für das zumindest eine weitere Leuchtmittel (19) freigegeben und damit das zumindest eine weitere Leuchtmittel (19) zur Abgabe von sichtbaren Lichtstrahlen eingeschaltet wird, wobei die Steuerungsvorrichtung (12) für die Steuerung des zumindest einen weiteren Leuchtmittels (19) in einem Automatik-Modus betrieben wird, und
- **dass** weiters von der Steuerungsvorrichtung (12) die Lichtabgabeachse (20) des zumindest einen weiteren Leuchtmittels (19) mittels des mit dem zumindest einen weiteren Leuchtmittel (19) in Antriebsverbindung stehenden Stellantriebs (21) in eine in der Steuerungsvorrichtung (12) hinterlegte Abstrahlrichtung eingestellt wird,
- **dass** die Abstrahlrichtung der Lichtabgabeachse (20) des zumindest einen weiteren Leuchtmittels (19) am Beginn des Betriebs des Einsatzfahrzeugs (1) in seinem zweiten Betriebszustand und/oder gegebenenfalls am Beginn des Betriebs des Einsatzfahrzeugs (1) in seinem dritten Betriebszustand auf die von der Abstellfläche (13) abgewendete Seite sowie im Wesentlichen in vertikaler Richtung nach oben ausgerichtet wird, und
- **dass** auch beim Beginn des vierten Betriebszustandes und/oder auch während des vierten Betriebszustandes die Lichtabgabeachse (20) des zumindest einen weiteren Leuchtmittels (19) im Wesentlichen in vertikaler Richtung nach oben ausgerichtet wird, und/oder
- **dass** im vierten Betriebszustand beim Verstellen der Hubeinheit (6) die Lichtabgabeachse (20) des zumindest einen weiteren Leuchtmittels (19) von der Steuerungsvorrichtung (12) in Richtung auf ein an der Hubeinheit (6) befindliches Personenaufnahmemittel (8), insbesondere einen Rettungskorb, ausgerichtet wird.

2. Verfahren nach Anspruch 1, **dadurch gekennzeichnet, dass** die Lichtabgabeachse (20) des zumindest einen weiteren Leuchtmittels (19) ausgehend von der in vertikaler Richtung nach oben ausgerichteten Abstrahlrichtung um einen in der Steuerungsvorrichtung (12) hinterlegten Schwenkwinkel verschwenkt wird.

3. Verfahren nach Anspruch 2, **dadurch gekennzeichnet, dass** die Lichtabgabeachse (20) des zumindest einen weiteren Leuchtmittels (19) innerhalb eines in der Steuerungsvorrichtung (12) hinterlegten Schwenkwinkelbereichs ständig verschwenkt wird.

4. Verfahren nach Anspruch 1, **dadurch gekennzeichnet, dass** das Ausrichten der Lichtabgabeachse (20) des zumindest einen weiteren Leuchtmittels (19) in Richtung auf das Personenaufnahmemittel (8), insbesondere den Rettungskorb, erst bei einem Hochschwenken des Auslegers (7) um einen Verstellwinkel von 15° bezüglich einer Horizontalebene durchgeführt wird.

5. Verfahren nach einem der vorhergehenden Ansprüche, **dadurch gekennzeichnet, dass** das zumindest eine weitere Leuchtmittel (19) mit seiner Lichtabgabeachse (20) derart gelenkig gelagert wird, dass die Abstrahlrichtung der Lichtabgabeachse (20) räumlich verstellbar ist.

6. Verfahren nach einem der vorhergehenden Ansprüche, **dadurch gekennzeichnet, dass** das zumindest eine weitere Leuchtmittel (19) bei einer Fahrgeschwindigkeit von gleich oder kleiner 15 km/h oder nach dem Einschalten der Antriebseinheit (11) für die Hubeinheit (6) oder bei betätigter Feststellbremse vom Energieversorgungssystem (15) mit Energie zur Abgabe von Lichtstrahlen versorgt wird.

7. Verfahren nach Anspruch 1, **dadurch gekennzeichnet, dass** die Steuerungsvorrichtung (12) von ihrem Automatik-Modus in einen Manuell-Modus umgestellt wird und die Zufuhr von Energie aus dem Energieversorgungssystem (15) zu dem zumindest einen weiteren Leuchtmittel (19) mittels der Steuerungsvorrichtung (12) manuell aktiviert oder manuell deaktiviert werden kann und/oder die Abstrahlrichtung der Lichtabgabeachse (20) des zumindest einen weiteren Leuchtmittels (19) mittels der Steuerungsvorrichtung (12) manuell eingestellt werden kann.

8. Verfahren nach einem der vorhergehenden Ansprüche, **dadurch gekennzeichnet, dass** zumindest eine optische Erfassungsvorrichtung (23) bereitgestellt wird, mittels welcher zumindest einen optischen Erfassungsvorrichtung (23) jener das Einsatzfahrzeug (1) umgebende Raum, insbesondere jener oberhalb des Einsatzfahrzeugs (1) befindliche Raum und/oder die Abstellfläche (13), erfasst und das erfasste Ist-Bild an eine Anzeigevorrichtung (24) übertragen wird und an der Anzeigevorrichtung (24) dargestellt wird.

9. Verfahren nach Anspruch 8, **dadurch gekennzeichnet, dass** das erfasste Ist-Bild an die Steuerungsvorrichtung (12) übertragen wird und von dieser mittels eines Objekterkennungsmoduls der ein Hindernis bildende Gegenstand, insbesondere jener oberhalb des Einsatzfahrzeugs (1) befindliche Gegenstand, ermittelt wird.

10. Verfahren nach Anspruch 9, **dadurch gekennzeichnet, dass** bei Ermitteln des oberhalb des Einsatzfahrzeugs (1) befindlichen Gegenstandes von der Steuerungsvorrichtung (12) ein Warnhinweis an der Anzeigevorrichtung (24) angezeigt oder ein Warnton ausgegeben wird.

11. Verfahren nach einem der vorhergehenden Ansprüche, **dadurch gekennzeichnet, dass** zumindest ein Blendschutzelement (22) bereitgestellt wird, welches zumindest eine Blendschutzelement (22) derart in den vom zumindest einen weiteren Leuchtmittel (19) abgegebenen Lichtkegel hinein verstellt wird, dass ein Lichtzutritt in Richtung auf ein von einem Drehgestell (10) distanziert angeordnetes Ende des Auslegers (7), insbesondere in Richtung auf einen Korb oder eine Arbeitsbühne, verhindert wird.

12. Verfahren nach einem der vorhergehenden Ansprüche, **dadurch gekennzeichnet, dass** mehrere weitere Leuchtmittel (19) vorgesehen werden und jedes der weiteren Leuchtmittel (19) mit einem eigenen Stellantrieb (21) in Antriebsverbindung steht und weiters mit der Steuerungsvorrichtung (12) in Kommunikationsverbindung steht.

13. Verfahren nach Anspruch 1, **dadurch gekennzeichnet, dass** das zumindest eine weitere Leuchtmittel (19) an einem Drehgestell (10) und/oder an einer Lafette und/oder an einem der Leiterteile eines Leitersatzes und/oder an einem der Teleskope einer Teleskopbühne und/oder dem Personenaufnahmemittel (8) angeordnet wird.

14. Verfahren nach einem der vorhergehenden Ansprüche, **dadurch gekennzeichnet, dass** eine erste Detektionsvorrichtung (25) zur Erfassung des elektromagnetischen Wechselfeldes von einer eine Wechselspannung führenden Leitung bereitgestellt wird und die erste Detektionsvorrichtung (25) am Fahrzeugaufbau (5) angeordnet wird.

15. Verfahren nach Anspruch 1, **dadurch gekennzeichnet, dass** eine zweite Detektionsvorrichtung (26) zur unmittelbaren Umfelderkennung des an der Hubeinheit (6) befindlichen Personenaufnahmemittels (8), insbesondere den Rettungskorb, umgebenden Umfeldes bereitgestellt wird und die zweite Detektionsvorrichtung (26) zur Erfassung des elektromagnetischen Wechselfeldes von einer eine Wechselspannung führenden Leitung ausgebildet ist und am Personenaufnahmemittel (8) angeordnet wird.

16. Verfahren nach einem der vorhergehenden Ansprüche, **dadurch gekennzeichnet, dass** zumindest ein Helligkeitssensor zur Ermittlung der Beleuchtungsstärke bereitgestellt wird und der ermittelte Ist-Wert an die Steuerungsvorrichtung (12) weitergeleitet wird.

## Claims

1. A method for illuminating a surrounding region of an emergency vehicle (1) designed as a hoisting rescue vehicle of a fire department and for optical detection of an object forming an obstacle, such as a branch, a projecting part of a building, a wire, a conducting wire carrying electric current, above the emergency vehicle (1), in which the following steps are carried out:
- providing the emergency vehicle (1) comprising
- a chassis (2),
- a vehicle body (5),
- a lifting unit (6) formed as a cantilever (7) or a platform,
- a controller (12) for controlling and monitoring the operation of the emergency vehicle (1) in its operating states,
- an energy supply system (15) for delivering electrical energy,
- several first light sources (14), which serve at least for the illumination of the emergency vehicle (1) during its driving operation,
- at least one further light source (19) with a light emission axis (20), wherein the at least one further light source (19) is arranged pivotably at least on the lifting unit (6) formed as a cantilever (7) or a platform,
- providing at least one actuator (21), wherein the at least one actuator (21) is drive-connected to the at least one further light source (19) and furthermore the at least one actuator (21) is in communication connection with the controller (12),
- driving the emergency vehicle (1) to a site of operation, the emergency vehicle (1) being operated in its first operating state, in which first operating state the lifting unit (6), which is formed as a cantilever (7) or a platform, is in a compact transport position on the emergency vehicle (1),
- searching for, selecting and positioning the emergency vehicle (1) at a parking area (13) selected and defined at the site of operation, wherein the emergency vehicle (1) is operated in its second operating state,
- optionally extending and positioning support arms (16) of a support device (17) of the emergency vehicle (1) above the selected parking area (13), and bringing the support arms (16) into contact with the parking area (13) and supporting the emergency vehicle (1) by means of the support arms (16) on the parking area (13), wherein the emergency vehicle (1) is operated in its third operating state,
- displacement of the lifting unit (6) formed as a cantilever (7) or platform by means of a drive unit (11) starting from its compact transport position, which it is in during the journey to the place of use, into an operational position, wherein the emergency vehicle (1) is operated in its fourth operating state,
**characterized in that**
- the controller (12) releases the energy supply from the energy supply system (15) for the at least one further light source (19) at the start of operation of the emergency vehicle (1) in its second operating state or, optionally, at the start of operation of the emergency vehicle (1) in its third operating state, and the at least one further light source (19) is thus switched on to emit visible light beams, wherein the controller (12) is operated in an automatic mode for controlling the at least one further light source (19), and
- furthermore, the light emission axis (20) of the at least one further light source (19) is set by the controller (12) by means of the actuator (21), which is drive-connected to the at least one further light source (19), in a direction of emission which is stored in the controller (12),
- the direction of emission of the light emission axis (20) of the at least one further light source (19) at the start of operation of the emergency vehicle (1) in its second operating state and/or optionally at the start of operation of the emergency vehicle (1) in its third operating state, is directed towards the side facing away from the parking area (13) and substantially vertically upwards, and
- also at the start of the fourth operating state and/or also during the fourth operating state, the light emission axis (20) of the at least one further light source (19) is aligned substantially vertically upwards, and/or
- in the fourth operating state, when the lifting unit (6) is adjusted, the light emission axis (20) of the at least one further light source (19) is aligned by the controller (12) in the direction of a person receiving means (8), in particular a rescue cage, located on the lifting unit (6).

2. The method according to claim 1, **characterized in that** the light emission axis (20) of the at least one further light source (19) is pivoted by a pivot angle stored in the controller (12) starting out from the direction of emission oriented upwards in the vertical direction.

3. The method according to claim 2, **characterized in that** the light emission axis (20) of the at least one further light source (19) is constantly pivoted within a pivot angle range stored in the controller (12).

4. The method according to claim 1, **characterized in that** the alignment of the light emission axis (20) of the at least one further light source (19) in the direction towards the person receiving means (8), in particular the rescue cage, is only carried out when the cantilever (7) is pivoted upwards by an adjustment angle of 15° relative to a horizontal plane.

5. The method according to one of the preceding claims, **characterized in that** the at least one further light source (19) is mounted in an articulated manner with its light emission axis (20) in such a way that the direction of emission of the light emission axis (20) is spatially adjustable.

6. The method according to one of the preceding claims, **characterized in that** the at least one further light source (19) is supplied with energy for emitting light beams by the energy supply system (15) at a travel speed equal to or less than 15 km/h or after switching on the drive unit (11) for the lifting unit (6) or when the parking brake is actuated.

7. The method according to claim 1, **characterized in that** the controller (12) is switched from its automatic mode into a manual mode and the supply of energy from the energy supply system (15) to the at least one further light source (19) can be manually activated or manually deactivated by means of the controller (12) and/or the direction of emission of the light emission axis (20) of the at least one further light source (19) can be manually adjusted by means of the controller (12).

8. The method according to one of the preceding claims, **characterized in that** at least one optical detection device (23) is provided, by means of which at least one optical detection device (23) the space surrounding the emergency vehicle (1), in particular the space located above the emergency vehicle (1) and/or the parking area (13) can be detected and the detected actual image can be transmitted to a display (24) and shown on the display (24).

9. The method according to claim 8, **characterized in that** the detected actual image is transmitted to the controller (12) and the object forming an obstacle, in particular the object located above the emergency vehicle (1), is determined by the controller (12) by means of an object recognition module.

10. The method according to claim 9, **characterized in that** when the object located above the emergency vehicle (1) is determined by the controller (12), a warning message is displayed on the display (24) or an audio warning is emitted.

11. The method according to one of the preceding claims, **characterized in that** at least one glare cover element (22) is provided, said at least one glare cover element (22) is adjusted into the cone of light emitted by the at least one further light source (19) in such a way that light access in the direction of an end of the cantilever (7) arranged at a distance from a bogie (10), in particular in the direction of a cage or a working platform, is prevented.

12. The method according to one of the preceding claims, **characterized in that** several further light sources (19) are provided and each one of the further light sources (19) is drive-connected to a separate actuator (21) and further is in communication connection with the controller (12).

13. The method according to claim 1, **characterized in that** the at least one further light source (19) is arranged on a bogie (10) and/or a carriage and/or on one of the ladder parts of a ladder set and/or on one of the telescopes of a telescopic platform and/or the person receiving means (8).

14. The method according to one of the preceding claims, **characterized in that** a first detecting means (25) for detecting the electromagnetic alternating field of a line carrying an alternating voltage is provided and the first detecting means (25) is arranged on the vehicle body (5).

15. The method according to claim 1, **characterized in that** a second detecting means (26) is provided for direct detection of the surrounding of the person receiving means (8), in particular the rescue cage, located on the lifting unit (6) and the second detecting means (26) is designed to detect the electromagnetic alternating field of a line carrying an alternating voltage and is arranged on the person receiving means (8).

16. The method according to one of the preceding claims, **characterized in that** at least one brightness sensor for determining the illumination intensity is provided and the determined actual value is forwarded to the controller (12).

## Revendications

1. Procédé d'éclairage d'un environnement d'un véhicule d'intervention (1) conçu comme un véhicule de sauvetage à levage télescopique des sapeurs-pompiers et de détection optique d'un objet constituant un obstacle, comme une branche, une partie de bâtiment en surplomb, un fil, un câble conduisant un courant électrique, au-dessus du véhicule d'intervention (1), dans lequel les étapes suivantes sont exécutées :
- mise à disposition du véhicule d'intervention (1) comprenant
- un châssis (2),
- une carrosserie de véhicule (5),
- une unité de levage (6) qui est conçue comme une flèche (7) ou une nacelle,
- un dispositif de commande (12) pour le contrôle et la surveillance du fonctionnement du véhicule d'intervention (1) dans ses états de fonctionnement,
- un système d'alimentation en énergie (15) pour la distribution d'énergie électrique,
- plusieurs premiers moyens d'éclairage (14), qui permettent au moins l'éclairage du véhicule d'intervention (1) pendant sa marche,
- au moins un moyen d'éclairage supplémentaire (19) avec un axe d'émission de lumière (20), dans lequel l'au moins un moyen d'éclairage supplémentaire (19) est disposé de manière pivotante au moins sur l'unité de levage (6) conçue comme une flèche (7) ou une nacelle,
- mise à disposition d'au moins un actionneur (21), dans lequel l'au moins un actionneur (21) est en liaison d'entraînement avec l'au moins un moyen d'éclairage supplémentaire (19) et en outre l'au moins un actionneur (21) est en liaison de communication avec le dispositif de commande (12),
- déplacement du véhicule d'intervention (1) vers un lieu d'intervention, dans lequel le véhicule d'intervention (1) fonctionne dans son premier état de fonctionnement et, dans ce premier état de fonctionnement, l'unité de levage (6) conçue comme une flèche (7) ou une nacelle se trouve dans une position de transport compacte sur le véhicule d'intervention (1),
- recherche, sélection et arrêt positionné du véhicule d'intervention (1) sur une surface d'arrêt (13) sélectionnée et déterminée sur le lieu d'intervention, dans lequel le véhicule d'intervention (1) fonctionne dans son deuxième état de fonctionnement,
- le cas échéant, déploiement et positionnement de bras d'appui (16) d'un dispositif d'appui (17) du véhicule d'intervention (1) au-dessus de la surface d'arrêt (13) sélectionnée, et mise en contact des bras d'appui (16) avec la surface d'arrêt (13) et appui du véhicule d'intervention (1) au moyen des bras d'appui (16) contre la surface d'arrêt (13), dans lequel le véhicule d'intervention (1) fonctionne dans son troisième état de fonctionnement,
- déplacement de l'unité de levage (6) conçue comme une flèche (7) ou une nacelle, au moyen d'une unité d'entraînement (11), de sa position de transport compacte pendant le trajet vers le lieu d'intervention vers une position d'intervention, dans laquelle le véhicule d'intervention (1) fonctionne dans son quatrième état de fonctionnement, **caractérisé en ce que**
- l'alimentation en énergie du système d'alimentation en énergie (15) pour l'au moins un moyen d'éclairage supplémentaire (19) est libéré par le dispositif de commande (12) au début du fonctionnement du véhicule d'intervention (1) dans son deuxième état de fonctionnement ou, le cas échéant, au début du fonctionnement du véhicule d'intervention (1) dans son troisième état de fonctionnement et l'au moins un moyen d'éclairage supplémentaire (19) est ainsi activé pour l'émission de rayons lumineux visibles, dans lequel le dispositif de commande (12) pour le contrôle de l'au moins un moyen d'éclairage supplémentaire (19) fonctionne dans un mode automatique et
- en outre l'axe d'émission de lumière (20) de l'au moins un moyen d'éclairage supplémentaire (19) est réglé, par le dispositif de commande (12), au moyen de l'actionneur (21) en liaison d'entraînement avec l'au moins un moyen d'éclairage supplémentaire (19) dans une direction d'émission enregistrée dans le dispositif de commande (12),
- la direction d'émission de l'axe d'émission de lumière (20) de l'au moins un moyen d'éclairage supplémentaire (19) est orientée, au début du fonctionnement du véhicule d'intervention (1) dans son deuxième état de fonctionnement et/ou, le cas échéant, au début du fonctionnement du véhicule d'intervention (1) dans son troisième état de fonctionnement, vers le côté opposé à la surface d'arrêt (13) ainsi que globalement dans la direction verticale vers le haut et
- même au début du quatrième état de fonctionnement et/ou même pendant le quatrième état de fonctionnement, l'axe d'émission de lumière (20) de l'au moins un moyen d'éclairage supplémentaire (19) est orienté globalement dans la direction verticale vers le haut et/ou
- dans le quatrième état de fonctionnement, lors du déplacement de l'unité de levage (6), l'axe d'émission de lumière (20) de l'au moins un moyen d'éclairage supplémentaire (19) est orienté par le dispositif de commande (12) en direction d'un moyen de transport de personnes (8) se trouvant sur l'unité de levage (6), plus particulièrement une nacelle de sauvetage.

2. Procédé selon la revendication 1, **caractérisé en ce que** l'axe d'émission de lumière (20) de l'au moins un moyen d'éclairage supplémentaire (19) est pivoté de la direction d'émission orientée dans la direction verticale vers le haut d'un angle de pivotement enregistré dans le dispositif de commande (12).

3. Procédé selon la revendication 2, **caractérisé en ce que** l'axe d'émission de lumière (20) de l'au moins un moyen d'éclairage supplémentaire (19) est pivoté en permanence à l'intérieur d'une plage angulaire de pivotement enregistrée dans le dispositif de commande (12).

4. Procédé selon la revendication 1, **caractérisé en ce que** l'orientation de l'axe d'émission de lumière (20) de l'au moins un moyen d'éclairage supplémentaire (19) est effectuée en direction du moyen de transport de personnes (8), plus particulièrement la nacelle de sauvetage, uniquement lors d'un pivotement vers le haut de la flèche (7) d'un angle de réglage de 15° par rapport à un plan horizontal.

5. Procédé selon l'une des revendications précédentes, **caractérisé en ce que** l'au moins un moyen d'éclairage supplémentaire (19) est monté de manière articulée avec son axe d'émission de lumière (20) de façon à ce que la direction d'émission de l'axe d'émission de lumière (20) puisse être réglée dans l'espace.

6. Procédé selon l'une des revendications précédentes, **caractérisé en ce que** l'au moins un moyen d'éclairage supplémentaire (19) est alimenté par le système d'alimentation en énergie (15) avec une énergie pour l'émission de rayons lumineux à une vitesse inférieure ou égale à 15 km/h ou après l'activation de l'unité d'entraînement (11) pour l'unité de levage (6) ou lorsque le frein de stationnement est actionné.

7. Procédé selon la revendication 1, **caractérisé en ce que** le dispositif de commande (12) est passé de son mode automatique vers un mode manuel et l'alimentation en énergie du système d'alimentation en énergie (15) vers l'au moins un moyen d'éclairage supplémentaire (19) peut être activée manuellement ou désactivée manuellement au moyen du dispositif de commande (12) et/ou la direction d'émission de l'axe d'émission de lumière (20) de l'au moins un moyen d'éclairage supplémentaire (19) peut être réglée manuellement au moyen du dispositif de commande (12).

8. Procédé selon l'une des revendications précédentes, **caractérisé en ce qu'**au moins un dispositif de détection optique (23) est mis à disposition et, au moyen de cet au moins un dispositif de détection optique (23), l'espace environnant le véhicule d'intervention (1), plus particulièrement l'espace se trouvant au-dessus du véhicule d'intervention (1) et/ou la surface d'arrêt (13), est capturé et l'image effective capturée est transmise à un dispositif d'affichage (24) et représentée au niveau du dispositif d'affichage (24).

9. Procédé selon la revendication 8, **caractérisé en ce que** l'image effective capturée est transmise au dispositif de commande (12) et celui-ci détecte, au moyen d'un module de détection d'objet, un objet constituant un obstacle, plus particulièrement un objet se trouvant au-dessus du véhicule d'intervention (1).

10. Procédé selon la revendication 9, **caractérisé en ce que**, lors la détection de l'objet se trouvant au-dessus du véhicule d'intervention (1) par le dispositif de commande (12), une alarme est affichée sur le dispositif d'affichage (24) ou un son est émis.

11. Procédé selon l'une des revendications précédentes, **caractérisé en ce qu'**au moins un élément de protection (22) est mis à disposition, cet au moins un élément de protection (22) étant déplacé dans le cône de lumière émis par l'au moins un moyen d'éclairage supplémentaire (19), de façon à ce qu'une entrée de lumière en direction d'une extrémité de la flèche (7), disposée à une certaine distance d'un châssis rotatif (10), plus particulièrement en direction d'une nacelle ou d'une plateforme de travail, soit empêchée.

12. Procédé selon l'une des revendications précédentes, **caractérisé en ce que** plusieurs moyens d'éclairage supplémentaires (19) sont prévus et chacun des moyens d'éclairage supplémentaires (19) est en liaison d'entraînement avec son propre actionneur (21) et est en outre en liaison de communication avec le dispositif de commande (12).

13. Procédé selon la revendication 1, **caractérisé en ce que** l'au moins un moyen d'éclairage supplémentaire (19) est disposé sur un châssis rotatif (10) et/ou sur un affût et/ou sur un des éléments d'échelle d'un ensemble d'échelle et/ou sur un des éléments télescopiques d'une plateforme télescopique et/ou sur le moyen de transport de personnes (8).

14. Procédé selon l'une des revendications précédentes, **caractérisé en ce qu'**un premier dispositif de détection (25) est mis à disposition pour la mesure du champ électromagnétique alternatif d'un câble conduisant une tension alternative et le premier dispositif de détection (25) est disposé sur la carrosserie du véhicule (5).

15. Procédé selon la revendication 1, **caractérisé en ce qu'**un deuxième dispositif de détection (26) est mis à disposition pour la reconnaissance de l'environnement immédiat du moyen de transport de personnes (8) se trouvant sur l'unité de levage (6), plus particulièrement la nacelle de sauvetage et le deuxième dispositif de détection (26) est conçu pour la mesure du champ électromagnétique alternatif d'un câble conduisant une tension alternative et est disposé sur le moyen de transport de personnes (8).

16. Procédé selon l'une des revendications précédentes, **caractérisé en ce qu'**au moins un capteur de luminosité est mis à disposition pour la détermination de l'intensité de l'éclairage et la valeur effective déterminée est transmise au dispositif de commande (12).
